Europäisches Patentamt

European Patent Office

Office européen des brevets

(11) Numéro de publication: **0 039 638**
A1

# (12) DEMANDE DE BREVET EUROPEEN

(21) Numéro de dépôt: 81400680.5

(51) Int. Cl.³: **F 02 M 21/02**

(22) Date de dépôt: 30.04.81

(30) Priorité: 30.04.80 FR 8009747
12.09.80 FR 8019786
04.03.81 FR 8104681

(43) Date de publication de la demande: 11.11.81
Bulletin 81/45

(84) Etats contractants désignés: **BE DE GB IT NL**

(71) Demandeur: **Irvoas, Yves, Pont Ar Bloc'h Pleyer Christ,
F-29223 Saint Thegonnec (FR)**

(72) Inventeur: **Irvoas, Yves, Pont Ar Bloc'h Pleyer Christ,
F-29223 Saint Thegonnec (FR)**

(74) Mandataire: **Marquer, Francis, 35, Avenue Victor Hugo
Résidence Champfleury, F-78190 Voisins le Bretonneux
(FR)**

(54) Dispositif d'alimentation en gaz d'un moteur à combustion interne.

(57) Pour l'alimentation en gaz d'un moteur de véhicule,
un réservoir de gaz de pétrole liquéfié (100) est utilisé à
des étages de détendeurs (I à V). L'étage final (V) dans
la tubulure d'admission (T). Les étages de sortie (IV) et
(V) comprennent plusieurs détendeurs ($A_1 \ldots A_i$, respectivement $B_1 \ldots B_i$) à membrane non chargée et travaillent
en surpression quasi nulle et, au démarrage et au ralenti,
en régime transitoire alternatif avec battement des membranes.
De préférence, les détendeurs des étages de sortie
(IV et V) sont agencés dans l'espace suivant les faces
d'un polyèdre régulier.

- 1 -

## DISPOSITIF D'ALIMENTATION EN GAZ D'UN MOTEUR A COMBUSTION INTERNE

La présente invention concerne les dispositifs d'alimentation en gaz des moteurs à combustion interne et, plus particulièrement, l'alimentation en gaz de pétrole liquéfié de moteurs de véhicules.

La plupart des dispositifs existants sont constitués d'un ensemble vaporisateur-détendeur à deux ou trois étages assurant progressivement la détente du gaz d'alimentation comprimé et sa distribution à un carburateur ou un injecteur simple ou mixte, pour l'usage conjoint avec de l'essence. Ces détentes successives ont pour but de fournir, au carburateur mélangeur, du gaz combustible à pression constante aussi voisine que possible de la pression atmosphérique, pour réaliser un mélange uniforme avec l'air comburant admis dans le moteur. La détermination des rapports des débits massiques gaz combustible-air comburant, c'est-à-dire la richesse du mélange explosif, présente des difficultés en fonction des différents régimes requis pour le moteur, tout particulièrement en ce qui concerne les conditions de démarrage et de ralenti du moteur, et les reprises.

La présente invention a pour objet de proposer un système d'alimentation en gaz de moteur thermique d'une grande simplicité, permettant des réglages précis et fiables des différents étages de détendeurs pour correspondre aux différentes conditions d'utilisation, mais en autorisant cependant, en fonctionnement, des plages de variation importantes autour des conditions de réglage initiales et garantissant un démarrage sûr et rapide du moteur, même à la main.

La présente invention a pour autre objet de proposer un tel dispositif d'alimentation qui soit remarquablement insensible aux conditions annexes d'utilisation du moteur, notamment les conditions d'accélération ou de freinage d'un véhicule équipé de ce moteur.

Selon l'invention, un dispositif d'alimentation en gaz d'un moteur à combustion interne, comprenant plusieurs étages de détente interposés en série entre un réservoir de gaz et le moteur, ces étages comportant au moins un étage d'entrée relié au réservoir et comprenant un détendeur chargé par ressort et fournissant une pression sensiblement constante légèrement supérieure à la pression atmosphérique et un étage final de grande sensibilité ayant sa sortie reliée au circuit d'admission d'air du moteur, est caractérisé en ce que ledit étage final comprend au moins un détendeur à membrane non chargée et est agencé pour n'assurer sensiblement aucune détente et fonctionner en surpression quasi nulle et, au démarrage et au ralenti, en régime transitoire alternatif avec battement de la membrane en fonction de la dépression dans ledit circuit d'admission, dont les fluctuations se trouvent ainsi lissées.

Selon une autre caractéristique de l'invention, le dispositif comprend deux étages de sortie comprenant chacun au moins un détendeur à membrane non chargée et agencée pour fonctionner en surpression quasi nulle.

Suivant une autre caractéristique de l'invention, les étages de sortie comprennent au moins deux détendeurs disposés de manière à réduire, du point de vue inertiel, l'effet conjugué de la pesanteur et de la force centrifuge.

D'autres caractéristiques et avantages de la présente invention ressortiront de la description suivante de modes de réalisations donnés à titre illustratif, faite en relation avec les dessins annexés dans lesquels:

La figure 1 est une représentation schématique d'un dispositif d'alimentation en gaz selon la présente invention ;

La figure 2 représente schématiquement un mode de réalisation de la paire de pré-étage/étage final du dispositif de la figure 1 ;

La figure 3 représente schématiquement les deux étages de sortie d'un dispositif d'alimentation en gaz conforme à une première variante ;

La figure 4 illustre une seconde variante ;

Et la figure 5 représente schématiquement le dernier étage intermédiaire, les deux étages de sortie et la tubulure d'admission d'un dispositif d'alimentation conforme à une autre forme de réalisation.

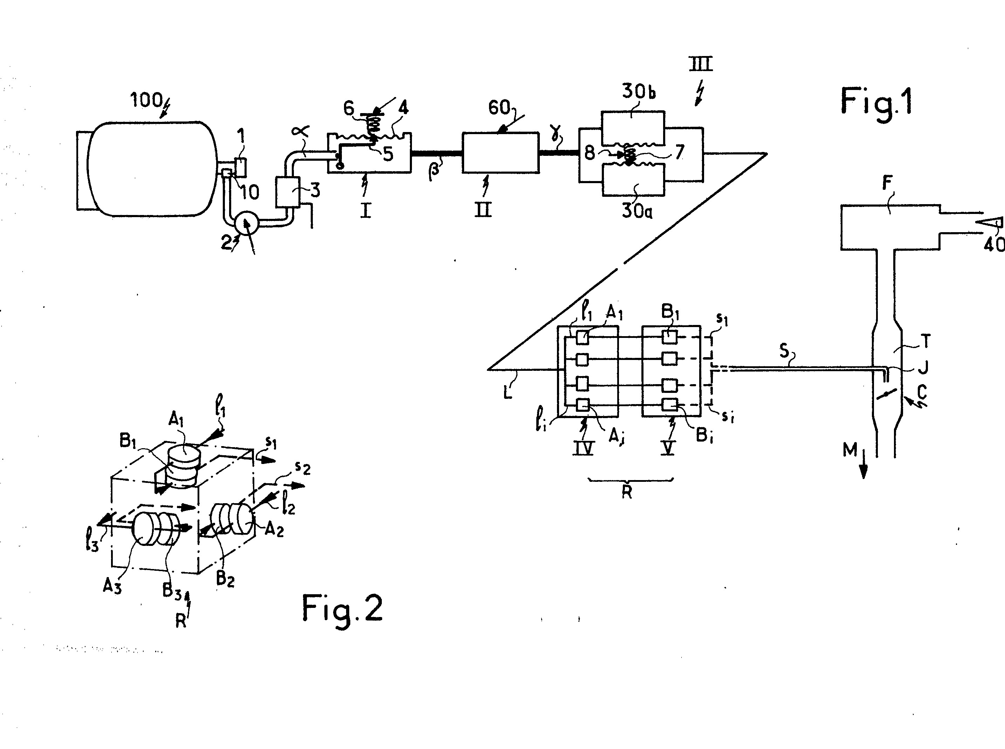

On a représenté à la figure 1, un dispositif d'alimentation pour un véhicule routier comprenant, de l'amont vers l'aval, une bonbonne 100 de gaz de pétrole liquéfié, tel que propane, butane ou mélange de ces deux gaz, équipée d'un robinet de sécurité 1 et d'un raccord à débranchement rapide à l'extrémité amont de la ligne d'alimentation. Celle-ci comprend une électro-vanne de commande d'ouverture ou de fermeture 2, un petit manchon chauffant 3, relié au système électrique du moteur ou à son système de refroidissement, et débouche dans un premier étage I constitué d'un détendeur de conception traditionnelle de type à contrôle de l'amont par l'aval, pour fournir une pression détendue constante et comprenant une membrane 4, sollicitée de la façon réglable par un ressort 6 et actionnant un levier coudé 5 muni d'un clapet, non figuré, contrôlant l'ouverture de la buse d'entrée dans le détendeur. La sortie β de l'étage I est reliée à un premier détendeur intermédiaire II de conception analogue à celui de l'étage I et susceptible d'être réglé par un ressort taré figuré en 60. La sortie λ de l'étage II fait communiquer celui-ci avec un second étage intermédiaire III constitué de deux détendeurs 30a et 30b montés en parallèle et en opposition, avec leurs membranes couplées par un ressort 7 dont le tarage peut être réglé comme figuré symboliquement en 8. Les sorties des détendeurs 30a et 30b sont réunies dans une ligne L aboutissant au voisinage du moteur M, dans un ensemble appairé R composé d'un pré-étage final IV et d'un étage final V dont la sortie S débouche en J dans la tubulure d'admission d'air T du moteur, juste avant le papillon du carburateur C, en aval du filtre à air F, dont l'entrée peut être modulée pour

- 4 -                    0039638

régler le débit massique d'air par un pointeau 40.

Le premier étage I est très largement dimensionné, non seulement en ce qui concerne la section de sa tubulure d'entrée α mais égament la surface de la membrane 4 et/ou le bras de levier du levier 5, pour réaliser une détente franche et une vaporisation du gaz provenant du réservoir 100 et l'amener, dans la tubulure de sortie β, à une surpression très faible (pression inférieure à 1,2 bar). L'étage III complète cette détente, de sorte que les étages finaux IV et V n'assurent en fait qu'une régulation de la pression délivrée à la tubulure T, pratiquement sans réaliser de détente complémentaire. Ces étages finaux fonctionnant ainsi à surpression quasi-nulle, sont extrêmement sensibles aux variations de la dépression de la tubulure T, laquelle est ainsi autorisée à "remonter" la ligne d'alimentation en gaz, plus ou moins loin vers l'amont en fonction de l'importance de cette dépression (qui croît avec le régime du moteur), puisque, au moins à partir de l'étage III, la surpression du gaz d'amenée est infime.

Au démarrage ou au ralenti, la dépression dans la tubulure T est, comme on le sait, très faible et sujette à des phénomènes de battements induits par les cycles du moteur. Les étages finaux IV et V fonctionnent alors en régime transitoire alternatif, avec battement en synchronisme des membranes en fonction des variations de ladite dépression. Pendant les alternances négatives de ces battements, les buses des détendeurs se trouvent alors beaucoup plus ouvertes qu'elles ne le seraient pour la valeur moyenne de la pression, tandis que, pendant les alternances positives, elles sont fermées. L'effet résultant est un accroissement notable du débit de gaz admis dans le carburateur, ce qui facilite le démarrage et améliore le ralenti. L'étage final V, comprend de préférence plusieurs, en l'occurence au moins quatre détendeurs identiques $B_1...B_i$, et la section S de la ligne de sortie est de préférence supérieure à la somme des sections des buses de sortie individuelles $s_1...s_i$ des différents détendeurs $B_i$. On pourra utiliser ainsi de petits détendeurs, dont la membrane (de quelques cm de diamètre) suit mieux les battements que ne le ferait celle d'un détendeur plus grand.

La disposition décrite procure d'une part, la
limitation, dans le sens amont-aval, des coups de boutoir de
la pression du gaz d'alimentation en fonction des séquences
d'ouverture ou de fermeture du détendeur de l'étage I et,
dans une moindre mesure, des détendeurs parallèles de l'étage III et, d'autre part, dans le sens aval-amont, une certaine temporisation de la remontée de la dépression provenant de la tubulure T.

Les membranes des détendeurs $B_1...B_i$ étant
libres, elles sont particulièrement sujettes, du point de
vue inertiel, aux conditions environnantes, notamment d'accélération, de virage ou de freinage, du véhicule équipé du
moteur M. La multiplication des détendeurs de l'étage final
permet déjà, dans une certaine mesure, de s'affranchir de
ces problèmes ; cependant, il est en outre préférable que
les détendeurs $B_i$ soient agencés dans l'espace de façon à
réduire les effets inertiels, l'une des dispositions retenues étant de les placer suivant les faces d'un polyèdre régulier. Dans l'exemple représenté, avec quatre détendeurs
$B_i$, ceux-ci seront disposés en face à face sur les quatre
faces latérales d'un cube. Dans l'exemple représenté à la
figure 2, où les détendeurs de chaque étage IV et V sont au
nombre de six, les détendeurs $B_i$ et également les détendeurs
$A_i$ du pré-étage final sont répartis suivant les six faces du
cube, ce qui confère donc à ces étages un caractère moyen
neutre en fonction des sollicitations extérieures.

Indépendamment des problèmes de démarrage proprement dits, ou de tenue au ralenti du moteur, le demandeur a
constaté que les problèmes de reprises du moteur, par exemple pour le passage du ralenti à une vitesse de fonctionnement nominal, pouvaient être grandement résolus en doublant
l'étage final V d'un pré-étage final amont IV, comportant de
préférence le même nombre de détendeurs $A_1...A_i$ à membranes
non chargées. A la reprise, à régime élevé, la dépression
est suffisante pour que les détendeurs de l'étage V soient
complètement ouverts et c'est sur l'étage IV que le phénomène de battement procure l'effet d'accroissement de l'appel de gaz qui a été expliqué ci-dessus.

Les détendeurs de l'étage IV seront avantageusement répartis suivant la même configuration spatiale que ceux de l'étage final V. Le pré-étage final IV introduit simultanément un complément d'équilibrage des détendeurs de l'étage final et une temporisation supplémentaire entre la partie aval du dispositif et la partie amont pour ce qui est des fronts d'onde de pression du gaz d'alimentation ou de dépression en provenance de la tubulure T. Vis-à-vis de ce dernier phénomène, le pré-étage final IV réalise un certain étouffement des fronts d'onde, notamment de battement, et permet ainsi, dans un premier temps, une aide à la reprise du moteur grâce au phénomène décrit ci-dessus, puis réalise dans un second temps, lorsque les phénomènes de battement font place à un régime d'écoulement sensiblement stationnaire avec un équilibre moyen statique entre la surpression amont et la dépression aval, une striction contrôlée permettant à l'étage intermédiaire précédent (III) de n'être que modérément affecté par la remontée de la dépression dans la ligne d'alimentation.

Toujours pour s'affranchir des problèmes inertiels propres aux membranes des détendeurs $A_1...A_i$, ceux-ci seront aussi avantageusement répartis suivant les faces d'un polyèdre régulier analogue à celui des détendeurs de l'étage final V. Ils pourront être chacun couplés en opposition avec les détendeurs correspondants $B_i$ de l'étage final V pour apparier ainsi en opposition les deux détendeurs en série des étages IV et V. Dans le cas où chaque étage comprend six détendeurs, chaque paire est agencée au centre des faces d'un cube comme représenté sur la figure 2. Pour des conditions d'utilisation plus sévères du moteur ou pour des moteurs de cylindrée importante, on utilisera pour chaque étage IV ou V, six ou douze détendeurs, les différents détendeurs étant répartis suivant une configuration spatiale dodécaédrique centrée, avec toujours deux détendeurs d'un même étage sur les faces opposées du polyèdre. On pourrait encore envisager d'agencer les détendeurs des deux étages finaux suivant les faces d'un rhombo-dodécaèdre ou d'un rhombo-tria-contaèdre. On pourrait même envisager de n'utiliser que deux détendeurs, disposés dos à dos ou en vis-à-vis ou trois détendeurs agencés selon une configuration cylindrique, ces solutions étant cependant nettement inférieures à la précédente.

Pour tenir compte, d'une part des phénomènes transitoires survenant, en aval, jusqu'au niveau de l'étage III, et d'autre part, des variations de pression du gaz dans la bonbonne 100, notamment, s'il s'agit de butane, en fonction de la température, on prévoit avantageusement, entre le premier étage de détente principal I et le premier étage intermédiaire III, un second étage intermédiaire II, dont la membrane peut être chargée de façon réglable par un ressort tarable comme figuré en 60. Typiquement, comme précédemment évoqué, la tubulure d'entrée α a une section au moins double de la section normale pour un détendeur I destiné à effectuer la détente visée, les tubulures intermédiaires β et ' entre les étages I - II et II - III, ainsi que les ajustages d'entrée de ces étages II et III, étant pareillement dimensionnés. Dans l'installation complète représentée sur la figure 1, les réglages des différents étages peuvent être analysés comme suit : l'étage I réalise une détente et un pré-réglage de la richesse du mélange en fonction des caractéristiques générales du moteur correspondant sensiblement au réglage de la richesse pour la vitesse de roulage sur autoroute, une grande plage de variation autour de la valeur de réglage étant autorisée par les étages suivants de la ligne d'admission. Le réglage du deuxième étage intermédiaire II correspond, en fait, au réglage de la richesse normale du mélange air/gaz pour le roulage sur route, la dépression du moteur, à cette allure, atteignant l'étage intermédiaire ultérieur III. Le réglage de ce premier étage intermédiaire III correspond au réglage de la richesse pour le ralenti ou le démarrage du moteur, puisque, dans ces conditions, la faible dépression dans la tubulure T ne remonte avec battements que jusqu'au pré-étage final IV, la fonction des étages finaux IV et V étant de lisser les fluctuations de la dépression au ralenti et à la reprise et de temporiser les fronts d'ondes ascendants ou descendants tout en asservissant la pression d'alimentation du gaz aux conditions atmosphériques ambiantes.

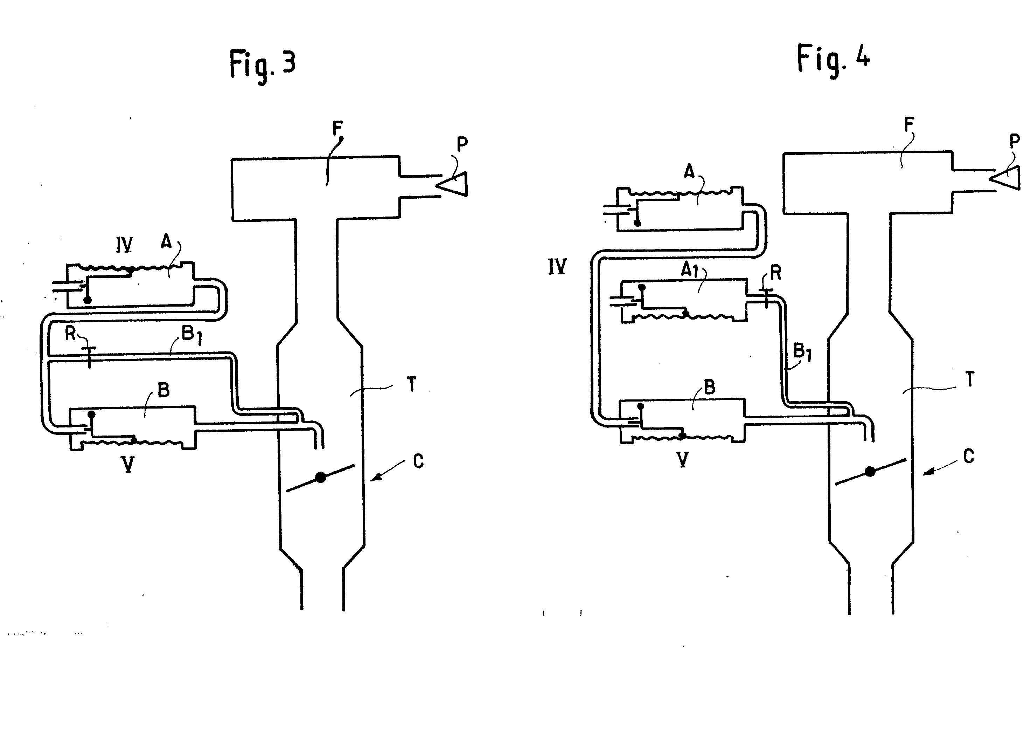

On a représenté, à la figure 3, le pré-étage final IV et l'étage final V d'un dispositif d'alimentation conforme à la figure 1 en ce qui concerne les étages I à III.

Chacun des étages IV et V comporte un seul détendeur A et B respectivement, du type à membrane non chargée et disposée horizontalement, en regard l'une de l'autre en position basse pour le détendeur B et en position haute pour le détendeur A, qui est situé au-dessus de B.

Une buse $B_1$, munie d'un robinet R, est reliée à la canalisation de connexion entre la sortie de A et l'entrée de B et débouche, comme la sortie de B, dans la tubulure T d'admission d'air du moteur, juste avant le papillon du carburateur C, en aval du filtre à air F, dont l'entrée est règlée par un pointeau P.

La section de la buse $B_1$ est avantageusement sensiblement égale ou légèrement inférieure à la section d'entrée de B.

Les membranes respectives de A et de B étant sensiblement horizontales, elles sont peu soumises, du point de vue inertiel, aux conditions environnantes, notamment d'accélération, de virage ou de freinage du véhicule.

Le propre poids des membranes a tendance à fermer le détendeur B et à ouvrir le détendeur A, ce qui, en définitive, facilite le battement en opposition des membranes en fonction des variations de la dépression dans la tubulure T.

On pourrait envisager de supprimer la buse $B_1$, mais il faudrait alors fermer davantage l'air à l'admission, ce qui est un inconvénient. La buse facilite la remontée de la dépression vers l'étage IV. Cet effet est accentué lorsqu'on prévoit, pour l'étage IV, un détendeur auxiliaire $A_1$, attaqué en parallèle avec le premier A (figure 4) et ayant sa membrane en position basse. Dans cette variante, l'entrée de la buse est reliée à la sortie du détendeur $A_1$.

Le robinet R permet de fermer la buse, ce qui

- 9 -

0039638

facilite les démarrages manuels à chaud.

Selon une variante, l'ensemble constitué par la buse $B_1$ et le robinet R pourrait être remplacé par un détendeur mobile raccordé de la même façon que ledit ensemble à la figure 3 ou à la figure 4. Ce détendeur supplémentaire serait agencé pour pouvoir subir une rotation de 180°, c'est-à-dire pour passer d'une première position dans laquelle sa membrane serait en position basse, à une seconde position où sa membrane serait en position haute, ladite membrane étant, dans les deux positions, parallèle à celles des autres détendeurs.

La première position serait adoptée pour le démarrage manuel à chaud et la seconde pour le démarrage manuel à froid.

A titre de variante, l'on pourrait faire comporter à chacun des étages IV et V une pluralité de détendeurs agencés dans l'espace suivant les faces d'un demi-polyèdre régulier, c'est-à-dire, comportant la moitié des détendeurs prévus dans le mode d'exécution préféré décrit en se référant à la figure 1.

Les membranes des détendeurs des étages respectifs seraient cependant disposés les unes par rapport aux autres, comme indiqué à la figure 3, c'est-à-dire "en bas" pour l'étage V et "en haut" pour l'étage IV et en regard les unes des autres deux à deux. Le "plan horizontal" défini plus haut serait alors celui qui partage le polyèdre complet en deux et définit la position moyenne de l'ensemble des détendeurs d'un même étage.

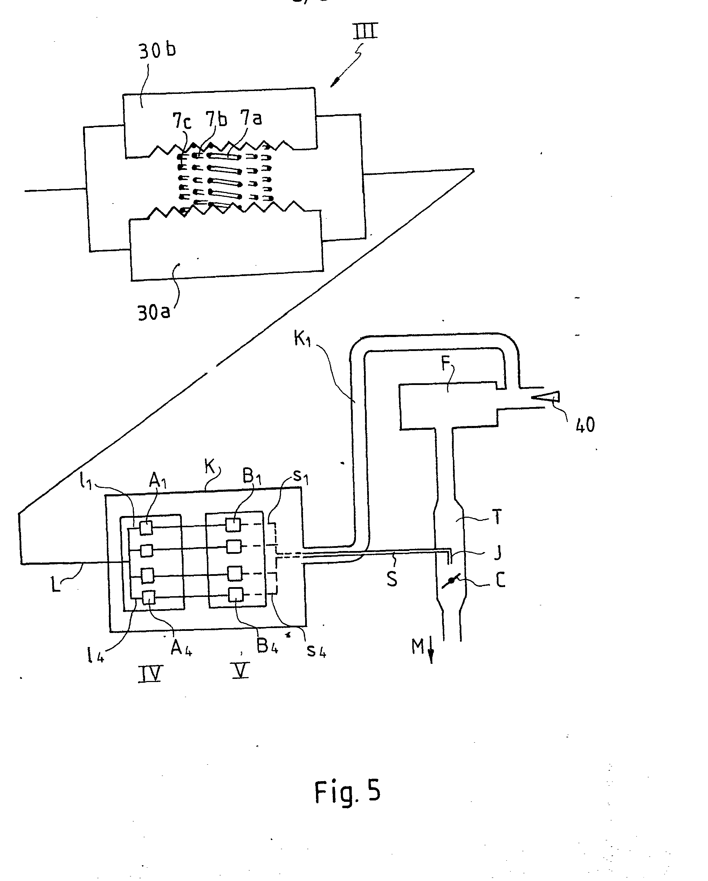

A la figure 5, on a supposé à titre d'exemple que les deux étages IV et V sont conformes à l'une des dispositions décrites en se référant à la figure 1, c'est-à-dire qu'ils comportent chacun quatre détendeurs ($A_1$ à $A_4$, respectivement $B_1$ à $B_4$) agencés dans l'espace suivant les quatre faces latérales d'un cube. Cette disposition n'est nullement limitative et l'on pourrait utiliser l'une quelconque des dispositions qui découlent de la description.

On n'a pas représenté les deux ou trois étages qui précèdent le dernier étage intermédiaire III, lequel est relié au pré-étage final IV par une ligne L qui sera aussi courte que possible. Les buses de sortie $S_1$ - $S_4$ des détendeurs de l'étage final V sont reliées à une ligne de sortie S qui débouche en J dans la tubulure d'admission d'air T du moteur M, juste avant le papillon du carburateur C, en aval du filtre à air F, dont l'entrée peut être modulée, pour régler le débit massique d'air, par un pointeau 40. L'air qui arrive en 40 est en surpression, aussi bien dans le cas où l'on a branché la tubulure T sur un ventilateur que dans le cas où l'on a utilisé un turbo-compresseur.

Dans le dispositif décrit, les étages IV et V sont logés dans un carter commun K relié par une conduite $K_1$ à l'entrée de la tubulure d'admission, ou encore à l'échappement. Pour régler la surpression à l'intérieur du carter K, on pourrait le munir d'un orifice de sortie de faible section réglable.

Il en résulte que les membranes des détendeurs sont en permanence soumises à la même pression que celle qui règne à l'entrée de la tubulure d'admission. Lorsque cette pression est supérieure à la pression atmosphérique, la poussée qu'elle excerce sur les membranes tend à favoriser l'ouverture des détendeurs, c'est-à-dire qu'elle agit dans le même sens que la dépression qui se manifeste au démarrage ou au ralenti.

Il peut être avantageux, bien que cela n'ait pas été représenté au dessin, de séparer les deux parties du carter K qui contiennent respectivement les étages IV et V par une cloison et de faire arriver la surpression aux deux compartiments ainsi définis par deux canalisations séparées. Cette solution permet de prévoir des réglages séparés des surpressions qui règnent au niveau des membranes des détendeurs des deux étages respectifs.

On notera que, si les réglages du dispositif sont tels qu'en régime de démarrage et de ralenti, la dépression dans la tubulure d'admission remonte jusqu'à l'étage III, ce dernier devra également de préférence être logé dans le carter pour que les membranes de ses détendeurs soient elles-mêmes soumises à la surpression.

0039638

On a représenté, à la figure 5, un dernier étage intermédiaire III comportant avantageusement deux détendeurs 30b et 30a disposés comme indiqué à la figure 1.

Suivant une particularité de la figure 5, trois ressorts concentriques réglables 7a - 7b - 7c ont été prévus entre les membranes des détendeurs 30b et 30a, le ressort 7c étant réglé pour que, lors de sa détente maximum, la surpression qui règne dans les étages III atteigne une première valeur, par exemple, de l'ordre de 30 millibars; le ressort 7b étant réglé pour que, lors de sa détente maximum, ladite surpression atteigne une deuxième valeur sensiblement inférieure à 30 millibars et le ressort 7c étant réglé pour que, lors de sa détente maximum, ladite surpression atteigne une troisième valeur sensiblement inférieure à la seconde. Grâce à cette disposition à ressorts multiples à action étagée, on peut obtenir, à l'aide d'un seul étage III, les réglages correspondant au ralenti et aux régimes de fonctionnement sur route et sur autoroute et par conséquent, envisager dans certains cas de supprimer les étages I et II.

Bien entendu, on pourrait procéder à un étagement différent des gammes de travail de ces ressorts ou obtenir un étagement avec tout système de ressort ayant une caractéristique de détente étagée réglable appropriée.

0039638

REVENDICATIONS DE BREVET

1- Dispositif d'alimentation en gaz d'un moteur à combustion interne, comprenant, plusieurs étages de détente interposés entre un réservoir de gaz et le moteur, ces étages comportant au moins un étage d'entrée (I) relié au réservoir et comprenant un détendeur chargé par ressort et fournissant une pression sensiblement constante et légèrement supérieure à la pression atmosphérique et un étage final (V) de grande sensibilité ayant sa sortie reliée au circuit d'admission d'air du moteur, caractérisé en ce qu'au moins ledit étage final (V) comprend au moins un détendeur à membrane non chargée, et est agencé pour n'assurer sensiblement aucune détente et fonctionner en surpression quasi nulle et, au démarrage et au ralenti, en régime transitoire alternatif avec battement de la membrane en fonction de la dépression dans ledit circuit d'admission, dont les fluctuations se trouvent ainsi lissées.

2- Dispositif selon la revendication 1, caractérisé en ce que l'étage final (V) comprend au moins deux détendeurs disposés de manière à réduire, du point de vue inertie, l'effet conjugué de la pesanteur et de la force centrifuge.

3- Dispositif selon la revendication 1, caractérisé en ce que l'étage final (V) comprend au moins quatre détendeurs $(B_i)$ à membranes non chargées, agencés dans l'espace suivant les faces d'un polyèdre, de préférence régulier.

4- Dispositif selon l'une des revendications 1 à 3, caractérisé en ce qu'il comprend un pré-étage final (IV) comportant le même nombre de détendeurs $(A_i)$ à membranes que l'étage final (V), chacun en série avec un détendeur $(B_i)$ de l'étage final, et répartis suivant les faces d'un même polyèdre de préférence régulier.

5- Dispositif selon la revendication 4, caractérisé en ce que chaque détendeur $(A_i)$ du pré-étage final (IV) est apparié en opposition à un détendeur $(B_i)$ de l'étage final (V).

6- Dispositif selon la revendication 1, caractérisé en ce que l'étage final comprend un détendeur (B) à membrane non chargée sensiblement orientée dans un plan horizontal, disposé de manière telle que la membrane se trouve en position basse par rapport au fond du boîtier, tandis que le pré-étage final comprend un détendeur (A), à membrane de préférence non chargée, ladite membrane étant sensiblement disposée dans un plan parallèle à celui de la membrane du détendeur de l'étage final et en regard de celle-ci et le détendeur (A) du pré-étage final étant disposé au-dessus de celui (B) de l'étage final, de manière telle que sa membrane se trouve en position haute par rapport au fond du boîtier.

7- Dispositif selon la revendication 6, caractérisé par une buse auxiliaire ($B_1$) débouchant dans le circuit d'admission d'air du moteur, au voisinage de la conduite de sortie du détendeur (B) de l'étage final, et qui est branchée sur la canalisation de liaison entre la sortie du détendeur du pré-étage final et l'entrée du détendeur de l'étage final.

8- Dispositif selon la revendication 6, caractérisé en ce que le pré-étage final comporte un détendeur supplémentaire ($A_1$) attaqué en parallèle avec le premier (A), ayant sa membrane en position basse et à la sortie duquel est branchée une buse auxiliaire ($B_1$) débouchant dans le circuit d'admission d'air du moteur au voisinage de la conduite de sortie du détendeur (B) de l'étage final.

9- Dispositif selon la revendication 6, caractérisé par un détendeur supplémentaire, relié au circuit d'admission d'air du moteur, au voisinage de la conduite de sortie du détendeur (B) de l'étage final et qui est branché sur la canalisation reliant la sortie du détendeur du pré-étage final et l'entrée du détendeur de l'étage final, ledit détendeur supplémentaire étant agencé pour pouvoir subir une rotation de 180°, le faisant passer d'une première position où sa membrane est en position basse à une seconde position où sa membrane est en position haute.

10- Dispositif selon la revendication 6, caractérisé en ce que le pré-étage final comporte un détendeur sup-

plémentaire ($A_1$) en parallèle avec le premier, ayant sa membrane en position basse et à la sortie duquel est branché un autre détendeur lui-même relié à un conduit débouchant dans le circuit d'admission d'air du moteur, au voisinage de la conduite de sortie du détendeur (3) de l'étage final, ledit autre détendeur étant agencé pour pouvoir subir une rotation de 180°, le faisant passer d'une première position où sa membrane est en position basse à une seconde position où sa membrane est en position haute.

11- Dispositif selon l'une des revendications 1 à 10, caractérisé en ce qu'au moins les étages de sortie (IV, V) du dispositif sont logés dans un carter sensiblement fermé (K) relié à l'amenée d'air en surpression.

12- Dispositif selon la revendication 11, caractérisé en ce que ledit carter est cloisonné en compartiments correspondant chacun à un étage de sortie et reliés chacun à ladite amenée d'air par une canalisation séparée.

13- Dispositif selon la revendication 11 ou 12, caractérisé en ce que le réglage du ou des détendeurs du dernier étage intermédiaire (III) est assré par un système de ressorts, comportant avantageusement deux ou plusieurs ressorts concentriques (7a, 7b, 7c), lesdits ressorts étant agencés pour réaliser leur détente ou leur compression maximum pour des surpressions étagées.

Fig.1

Fig.2

0039638

Fig. 4

Fig. 3

0039638

3/3

Fig. 5

# 0039638

Numéro de la demande

**Office européen des brevets**

## RAPPORT DE RECHERCHE EUROPEENNE

EP 81 40 0680

| | DOCUMENTS CONSIDERES COMME PERTINENTS | | |
|---|---|---|---|
| Catégorie | Citation du document avec indication, en cas de besoin, des parties pertinentes | Revendication concernée | |
| A | FR - A - 906 672 (SOZET)<br>* Page 1, lignes 1-32; page 3, lignes 77-92; figure 1 * | 1,3,6 | |
| A | FR - A - 989 166 (GRATZMULLER)<br>* Page 1, colonne de gauche en bas à colonne de droite en haut; page 2, colonne de gauche au centre * | 1,3,6 | |
| A | DE - A - 882 773 (GRATZMULLER)<br>* Page 3, lignes 79-88; figures * | 1,3 | |
| A | US - A - 2 778 720 (CLAIR)<br>* Colonne 2, ligne 64 à colonne 3, ligne 15; colonne 4, lignes 47-75; figure 2 * | 1,6 | |
| A | US - A - 2 988 078 (ENSIGN)<br>* Colonne 1, lignes 13-22; colonne 2, ligne 27 à colonne 3, ligne 25; figure 1 * | 1,6 | |
| A | DE - A - 2 627 723 (TNO)<br>* Page 1, revendication 1; figure 3 * | 1,13 | |

**CLASSEMENT DE LA DEMANDE (Int. Cl.³)**

F 02 M 21/02

**DOMAINES TECHNIQUES RECHERCHES (Int. Cl.³)**

F 02 M

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 09-06-1981 | TATUS |

OEB Form 1503.1 06.78